Europäisches Patentamt

European Patent Office

Office européen des brevets

(19)

(11) **EP 1 032 523 B1**

(12) **EUROPÄISCHE PATENTSCHRIFT**

(45) Veröffentlichungstag und Bekanntmachung des Hinweises auf die Patenterteilung:
**13.02.2002 Patentblatt 2002/07**

(51) Int Cl.⁷: **B62D 5/04**

(21) Anmeldenummer: **98962231.1**

(22) Anmeldetag: **09.11.1998**

(86) Internationale Anmeldenummer:
**PCT/DE98/03273**

(87) Internationale Veröffentlichungsnummer:
**WO 99/26832 (03.06.1999 Gazette 1999/22)**

(54) **SERVOLENKVORRICHTUNG FÜR EIN KRAFTFAHRZEUG**

MOTOR VEHICLE POWER STEERING DEVICE

SYSTEME DE DIRECTION ASSISTEE POUR AUTOMOBILE

(84) Benannte Vertragsstaaten:
**DE FR IT**

(30) Priorität: **20.11.1997 DE 29720631 U**

(43) Veröffentlichungstag der Anmeldung:
**06.09.2000 Patentblatt 2000/36**

(73) Patentinhaber: **SIEMENS AKTIENGESELLSCHAFT**
**80333 München (DE)**

(72) Erfinder:
• **SCHÄFER, Heinz**
  **D-97230 Estenfeld (DE)**
• **WÄHNER, Ludwig**
  **D-97234 Reichenberg (DE)**
• **JOHANNING, Hans-Peter**
  **D-97299 Zell am Main (DE)**

(56) Entgegenhaltungen:
**FR-A- 2 608 120**

• **H. SPAETH: "Steuerverfahren fuer Drehstrommaschinen" 1983 , SPRINGER-VERLAG , BERLIN XP002099120 in der Anmeldung erwähnt siehe Seite 42 - Seite 54 siehe Seite 67 - Seite 68; Abbildung 1.4**

**Beschreibung**

Die Erfindung bezieht sich auf eine Servolenkvorrichtung für ein Kraftfahrzeug gemäß Anspruch 1.

Servolenkvorrichtungen für ein Kraftfahrzeug benutzen vorwiegend eine hydraulische Drehmomentenunterstützung; soweit überhaupt Elektromotoren für derartige Servounterstützungen in Erwägung gezogen worden sind, wurden permanenterregte Kommutatormotore bzw. Synchronmotore oder Reluktanzmotore vorgeschlagen, die entweder mit Sicherheitsproblem, insbesondere im Fall eines Kurzschlusses, bzw. mit Bedien- und Komfortproblemen, insbesondere aufgrund ihrer Drehmomentenwelligkeit, behaftet sind.

Eine Servolenkvorrichtung mit den ersten beiden Merkmalen des Anspruchs 1 ist durch die FR 2 608 120 A1 bekannt.

Durch das Buch "Steuerverfahren für Drehstrommaschinen", von H. Späth, Springer Verlag 1983 ist eine feldorientierte Steuerung einer Asynchronmaschine mit einer Regelung des inneren Momentes nach dem Prinzip der verlustoptimalen Steuerung bzw. Regelung des Rotorflusses durch Einstellung des Magnetisierungsstromes in Abhängigkeit von einem entsprechend dem jeweils geforderten Antriebs-Drehmoment ermittelten Sollwert-Wirkstrom an sich bekannt.

Gemäß Aufgabe vorliegender Erfindung soll eine einfache, jedoch allen Betriebsanforderungen voll genügende und dabei den elektrischen Leistungsbedarf nur gering belastende Servounterstützung geschaffen werden.

Die Lösung dieser Aufgabe gelingt durch eine mittels eines Elektromotors in Form einer Asynchronmaschine unmittelbar servounterstützte Lenkvorrichtung für ein Kraftfahrzeug gemäß Patentanspruch 1; vorteilhafte Ausgestaltungen der Erfindung sind jeweils Gegenstand der Unteransprüche.

In Unterschied zu einem als Servounterstützung vorgesehenen Kommutatormotor oder dergleichen besteht bei Verwendung einer Asynchronmaschine nicht die Gefahr, daß im Fall eines Motorkurzschlusses die gesamte Lenkung blockiert ist, und im Vergleich zu Reluktanzmotoren werden Komforteinbußen durch Geräusche aufgrund einer Dremomentenwelligkeit vermieden, wobei in für eine Lenkvorrichtung in einem Kraftfahrzeug vorteilhafter minimaler elektrischer Belastung der zur Verfügung stehenden Stromquelle eine hohe Lenkdynamik durch unverzögerten Drehmomentenaufbau in der Asynchronmaschine gewährleistet werden kann.

Durch eine verlustoptimale Regelung des Rotorflusses nach dem Prinzip der feldorientierten Vektorstromregelung mit jeweils entsprechender Adaptierung des Magnetisierungsstromes an den zur Bildung des geforderten inneren Momentes notwendigen Wirkstrom zeichnet sich die erfindungsgemäße Servolenkvorrichtung durch einen erhöhten Wirkungsgrad und damit eine geringere Erwärmung sowie niedrigere Belastung des elektrischen Bordnetzes bei hoher Lebensdauer und Betriebssicherheit aus.

Der Steuerungs- bzw. Regelaufwand läßt sich in vorteilhafter Weise dadurch weiter mindern, daß bei Auslegung der Regelungstruktur aufgrund der betriebsmäßig im wesentlichen nur zu beherrschenden kleinen und zeitlich kurzen Lenkbewegungen zur Adaption des verlustoptimalen Magnetisierungsstroms in Abhängigkeit vom jeweils notwendigen Wirkstrom von einer gegen Null gehenden Statorfrequenz der pulsweitenmodulierten Spannung der Asynchronmaschine ausgegangen wird.

Die feldorientierte bzw. rotorflußorientierte Steuerung einer Asynchronmaschine ist an sich, z.B. durch das Buch "Steuerverfahren für Drehstrommaschinen" von H. Späth, Springer-Verlag, 1983, bekannt.

Die feldorientierte Steuerung der Asynchronmaschine geht von der mathematischen Beschreibung des dynamischen Maschinenverhaltens mit Raumzeigergrößen aus. Feldorientierung bedeutet, daß man die frei wählbare Bezugsachse dieses mathematischen Maschinenmodells bezüglich ihrer Winkellage fest mit dem Rotorflußraumzeiger, dem Statorflußraumzeiger oder dem Luftspaltflußraumzeiger verbindet. Die mathematisch einfachste Maschinenstruktur und damit auch die einfachste Struktur einer Steuerung ergeben sich dann, wenn der Rotorflußraumzeiger als Orientierungsgröße gewählt wird. Die Struktur der Maschine gleicht dann bei Vorgabe des Ständerstromraumzeigers der einer fremderregten kompensierten Gleichstrommaschine. Die feldorientierte Steuerung der Asynchronmaschine wird dadurch erreicht, daß man die im feldorientierten Koordinatensystem dargestellten Komponenten des Statorstromzeigers der Maschine als Steuer- bzw. Regelgrößen vorgibt. Mittels einer einfachen Entkopplung werden der Betrag des Flußraumzeigers und das innere Drehmoment unabhängig voneinander steuerbar.

Die Erfindung sowie weitere vorteilhafte Ausgestaltungen der Erfindung werden im folgenden anhand schematischer Darstellungen in der Zeichnung näher erläutert; darin zeigen:

FIG 1   die konstruktive Zuordnung einer Servounterstützung eines Elektromotors zu einer Kraftfahrzeuglenkung;

FIG 2   das Blockschaltbild einer verlustoptimalen Einstellung des Rotorfußes für eine rotorflußorientiert gesteuerte Asynchronmaschine.

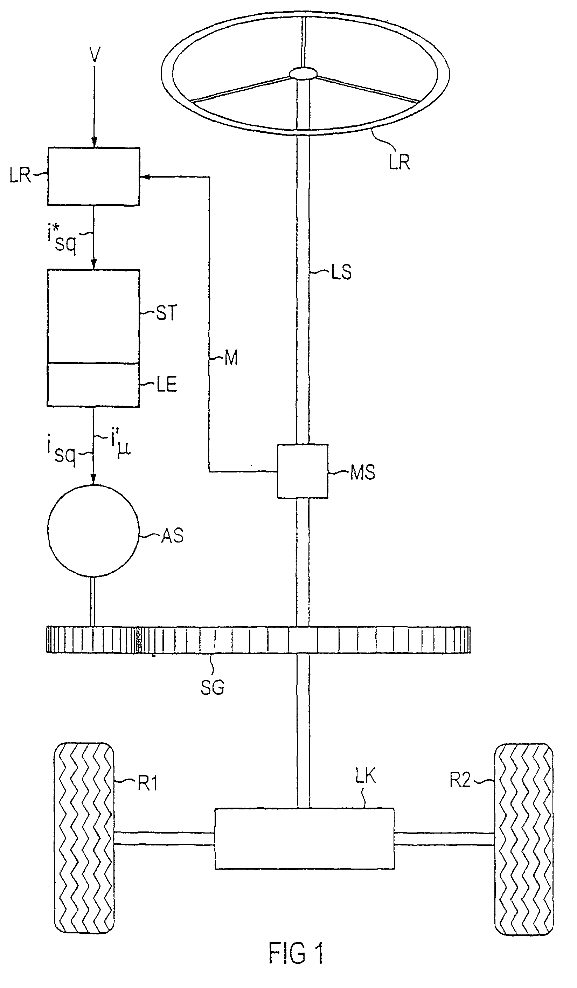

FIG 1 zeigt zwei Vorderräder R1;R2 eines Kraftfahrzeuges, die mittels eines Lenkrades LR über eine Lenksäule LS und ein Lenkgetriebe LK lenkbar sind. Zur Servounterstützung ist die Lenksäule LS über ein Getriebe G von einer Asynchronmaschine AS, insbesondere einer Asynchronmaschine mit Käfigläufer, antreibbar, die über eine Leistungselektronik LE von einer rotorflußorientierten Steuervorrichtung ST steuer- bzw. regelbar ist. Die Steuervorrichtung ST ist eingangsseitig mit einer Lenkungsregelung LR verbunden, der neben der jeweiligen Fahrgeschwindigkeit V insbesondere von einem im Zuge der Lenksäule LS angeordneten Drehmomentensensor MS das jeweilig abgeforderte Drehmoment M vorgegeben wird, aus dem ein entsprechender Sollwert-Wirkstrom $i_{sq}$* für die Steuervorrichtung ST abgeleitet wird. Aufgrund des jeweils ermittelten Sollwert-Wirkstromes $i_{sq}$* wird dann der für das notwendige innere Drehmoment $M_{i1}$ der Asynchronmaschine AS erforderliche Wirkstrom $i_{sq}$ und abhängig davon der im Sinne einer verlustoptimalen Einstellung des Rotorflußes notwendige Magnetisierungsstrom $i_\mu$' - wie im folgenden näher erläutert - ermittelt.

Dieses Steuer- bzw. Regelverfahren erleichtert die getrennte Vorgabe von Wirkstrom einerseits und Magnetisierungsstrom andererseits, wobei der Wirkstrom für die Drehmomentenbildung und der Magnetisierungsstrom für die Flußbildung, d.h. die Erregung herangezogen wird; dabei ist Magnetisierungsstrom nicht konstant sondern im Sinne eines minimalen Verlustes, d.h. einer geringsten Belastung der zur Verfügung stehenden Stromquelle, optimiert und an den jeweils notwendigen Wirkstrom adaptiert.

Die im folgenden erläuterten Maßnahmen zur verlustoptimalen Einstellung des Rotorfiußes basieren insbesondere auf dem eingangs genannten Schrifttum, insbesondere Pkt. 1.11.

Das im stationären Betrieb mit Rücksicht auf die zulässige Erwärmung der Asynchronmaschine AS innere Drehmoment ergibt sich zu

$$M_{i1} = K1 \cdot i_{sp} \cdot i_{sq}$$

mit $i_{sq}$ = Wirkstrom; $i_{sp}$ = Erregerstrom mit der Verknüpfung des auf den Stator bezogenen Magnetisierungs-(Blind)-Stroms $i'_\mu$ mit $i_{sp}$ über ein VZ1-Glied, d.h. ein durch die Rotorzeitkonstante bedingtes Verzögerungsglied 1. Ordnung.

Der Optimalwert des Magnetisierungsstromes $i'_{\mu\ opt}$ ergibt sich aus der ersten Ableitung der Verlustleistung $P_V = P_{VCu} + P_{VFe}$ zu

$$i'_{\mu\ opt} = \sqrt[4]{\frac{R_R + R_R'}{R_S + R_{Fe} \cdot h\frac{fs}{f_{sw}} + R_{Fe}\,(1 - h)(\frac{fs}{f_{SN}})^2}} \cdot \sqrt{\frac{M_{i1}}{K_1}}$$

Zweckmäßigerweise wird im Sinne einer vorteilhaften, die Bedingungen einer Servolenkung in einem Kraftfahrzeug ausnutzenden, Vereinfachung bei der Auslegung der Regelungsstruktur die Statorfrequenz $f_s$ = Null angenommen. Daraus folgt dann

$$i'_{\mu\ opt} = K_3 \cdot i_{sq}.$$

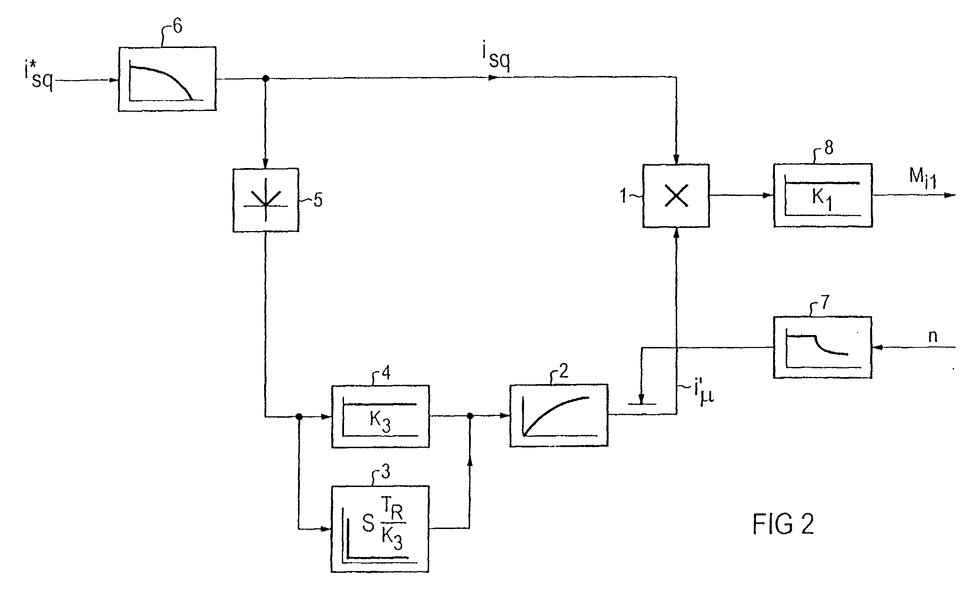

Zur Regelung bzw. Steuerung des inneren Drehmomentes $M_{i1}$ wird gemäß FIG 2 in einem Multiplizierer 1 das Produkt aus dem notwendigen Wirkstrom $i_{sq}$ und dem verlustoptimalen Magnetisierungsstrom $i'_{\mu\ opt}$ mit der Konstante $K_1$ gemäß der zuvor angegebenen Formel gebildet.

Der für das jeweilige innere Drehmoment $M_{i1}$ notwendige Wirkstrom $i_{sq}$ wird aus dem über den Drehmomentsensor MS bestimmten Sollwert-Wirkstrom $i_{sq}$* im wirkstromabhängigen Linearbildner 6 gewonnen. Durch den Linearbildner 6 soll eine lineare Abhängigkeit zwischen dem inneren Drehmoment $M_{i1}$ und dem momentenbildenden Wirkstrom $i_{sq}$ gewährleistet werden, was aufgrund der Produktbildung in dem Multiplizierer 1 an sich nicht gegeben ist; daher ist in dem Linearbildner 6 eine entsprechende Gegenoperation im Sinne einer vorzeichenunabhängigen Wurzeloperation vorgesehen.

Der Ausgangswert des Linearbildners 6 dient gleichzeitig zur Bildung des verlustoptimalen Magnetisierungsstromes $i'_{\mu\ opt}$, wobei der Ausgangswert des Linearbildners 6 über eine Vorsteuerung 3 im Sinne einer Kompensation der durch die Rotorzeitkonstante $T_R$ verzögerten, im Verzögerungsglied 2 berücksichtigten Bildung des Magnetisierungsstromes $i'_\mu$ geleitet und additiv geführt ist mit einem Proportionalglied 4 im Sinne einer Gesamtbearbeitung:

$$K_3 \left(1 + S\frac{T_R}{K_3}\right)$$

Zweckmäßigerweise ist zusätzlich im Adapations-Zweig für den Magnetisierungsstrom eingangsseitig ein Betragsbildner 5 vorgesehen, der die Abhängigkeit des Magnetisierungsstroms vom Vorzeichen des gemessenen Eingangswertes des Magnetisierungsstromes aufhebt; im Gegensatz dazu verbleibt im WirkstromZweig der Regelungsstruktur der Wirkstrom $i_{sq}$ vorzeichenbehaftet im Sinne einer Drehmomentbildung sowohl für Rechtslauf als auch für Linkslauf der Asynchronmaschine AS.

Nach einer weiteren Ausgestaltung der Erfindung wird der Magnetisierungsrom in vorteilhafter Weise in Abhängigkeit von einem Begrenzer 7 gestellt, derart daß der Magnetisierungsstrom bei höherer Drehzahl, insbesondere zur Verhinderung einer thermischen Überlastung bzw. im Sinne eines Feldschwächbetriebes, begrenzbar ist.

**Patentansprüche**

1.  Servolenkvorrichtung für ein Kraftfahrzeug

    -   mit einer Servountersützung durch einen Elektromotor;
    -   mit einer Asynchronmaschine (AS) als servounterstützendem Elektromotor;
    -   mit einer rotorflußorientiert geregelten Asynchronmaschine (AS) als servounterstützender Elektromotor;
    -   mit einer Regelung des inneren Momentes ($M_{i1}$) der Asynchronmaschine (AS) nach dem Prinzip der verlustoptimalen Steuerung bzw. Regelung des Rotorflusses durch Einstellung des Magnetisierungsstromes ($i'_\mu$) in Abhängigkeit von einem entsprechend dem jeweils geforderten Antriebs-Drehmoment ermittelten Sollwert-Wirkstrom ($i_{sq}*$); mit einer Ableitung des Magnetisierungsstromes ($i'_\mu$) aus dem jeweils entsprechend dem geforderten Drehmoment erforderlichen Sollwert-Wirkstrom ($i_{sq}*$) über eine Vorsteuerung (3) zur Kompensation des aufgrund der Rotorzeitkonstanten ($T_R$) verzögerten Bildung des Magnetisierungsstroms.

2.  Servolenkvorrichtung nach Anspruch 1

    -   mit einer Definition des verlustoptimalen Magnetisierungsstroms ($i'_{\mu\ opt}$) unter Vernachlässigung der Statorfrequenz des gepulsten Wirkstromes($i_{sq}$) bzw. Magnetisierungsstroms ($i'_\mu$) entsprechend der Formel

$$i'_{\mu\ opt} = \sqrt[4]{\frac{R_s + R_R'}{R_R}} \cdot \sqrt{\frac{M_{i1}}{K_1}} = K_2 \sqrt{\frac{M_{i1}}{K_1}} = K_2{}^2 \cdot i_{sq} = K_3 \cdot i_{sq}$$

        $R_s$ = Statorwiderstand
        $R_R'$ = auf Stator umgerechneter Rotorwiderstand
        $M_{i1}$ = inneres Drehmoment der AS = $K_1 \cdot i_{sq} \cdot i'_\mu$

3.  Servolenkvorrichtung nach Anspruch 1 und/oder 2

    -   mit einer Bildung der Regelgröße des jeweiligen inneren Momentes ($M_{i1}$) der Asynchronmaschine (AS) durch einen Multiplizierer (1) zur Produktbildung aus dem momentenbestimmenden Wirkstrom ($i_{sq}$) und dem im Sinne eines minimalen Verlustes angepaßten Magnetisierungsstroms ($i'_\mu$).

4.  Servolenkvorrichtung nach zumindest einem der vorhergehenden Ansprüche 1-3

    -   mit einem wirkstromabhängigen Linearbildner (6) im Sinne einer linearen Abhängigkeit zwischen dem geregelten inneren Moment ($M_{i1}$) der Asynchronmaschine (AS) und dem jeweils entsprechend dem geforderten Drehmoment ermittelten Sollwert-Wirkstrom ($i_{sq}*$) vor der Bildung der Regelgröße für den Wirkstrom ($i_{sq}$) und dem daraus abgeleiteten Magnetisierungsstrom ($i'_\mu$).

5.  Servolenkvorrichtung nach zumindest einem der vorhergehenden Ansprüche 1-4

    -   mit einer Ableitung des Magnetisierungsstromes ($i'_\mu$) aus dem jeweils entsprechend dem geforderten Drehmoment ermittelten Sollwert-Wirkstrom ($i_{sq}*$) über einen Betragsbildner (5).

6.  Servolenkvorrichtung nach zumindest einem der vorhergehenden Ansprüche 1-5

    -   mit einem Begrenzer (7) zur Begrenzung des Magnetisierungsstromes ($i'_\mu$) in Abhängigkeit von der Drehzahl (n) in der Asynchronmaschine (AS).

**Claims**

1. Power-assisted steering device for a motor vehicle,

   - having power assistance provided by an electric motor;
   - having an asynchronous machine (AS) as the power assistance-providing electric motor;
   - having an asynchronous machine (AS), which is controlled in a rotor flow-oriented fashion, as the power assistance-providing electric motor;
   - having control of the internal torque ($M_{i1}$) of the asynchronous machine (AS) in accordance with the principle of control of the rotor flow so as to optimize loss by setting the magnetization current ($i'_\mu$) as a function of set point value active current ($i_{sq}$*) which is determined in accordance with the respectively requested drive torque;
   - having the magnetization current ($i'_\mu$) derived from the set point value active current ($i_{sq}$*) which is respectively necessary in accordance with the requested torque, by means of pilot control (3) in order to compensate the formation of the magnetization current which is delayed on the basis of the rotor time constant ($T_R$).

2. Power-assisted steering device according to Claim 1,

   - having a definition of the magnetization current ($i'_{\mu\,opt}$) with optimized loss, not taking into account the stator frequency of the pulsed active current ($i_{sq}$) or magnetization current ($i'_\mu$) in accordance with the formula

$$i'_{\mu\,opt} = 4\sqrt{\frac{R_s + R_R{}'}{R_R}} \cdot \sqrt{\frac{M_{i1}}{K_1}} = K_2\sqrt{\frac{M_{i1}}{K_1}} = K_2{}^2 \cdot i_{sq} = K_3 \cdot i_{sq}$$

   $R_S$ = stator resistance
   $R_{R'}$ = rotor resistance coverted to stator
   $M_{i1}$ = internal torque of AS = $K_1 \cdot i_{sq} \cdot i'_\mu$

3. Power-assisted steering device according to Claim 1 and/or 2,

   - having the control variable of the respective internal torque ($M_{i1}$) of the asynchronous machine (AS) formed by a multiplier (1) in order to form the product of the active current ($i_{sq}$) which determines the torque and the magnetization current ($i'_\mu$) which is adapted in order to minimize loss.

4. Power-assisted steering device according to at least one of the preceding Claims 1-3,

   - having a linearizer (6) as a function of the active current with aim of establishing a linear dependence between the controlled internal torque ($M_{i1}$) of the asynchronous machine (AS) and the set point value active current ($i_{sq}$*) respectively determined in accordance with the requested torque, before the formation of the control variable for the active current ($i_{sq}$) and the magnetization current ($i'_\mu$) derived therefrom.

5. Power-assisted steering device according to at least one of the preceding Claims 1 - 4

   - having the magnetization current ($i'_\mu$) derived from the set point value active current ($i_{sq}$*) determined respectively in accordance with the requested torque, by means of an absolute value former (5).

6. Power-assisted steering device according to at least one of the preceding Claims 1 - 5,

   - having a limiter (7) for limiting the magnetization current ($i'_\mu$) as a function of the rotational speed (n) in the asynchronous machine (AS).

**Revendications**

1. Système de direction assistée pour un véhicule automobile,

- ayant une assistance par un moteur électrique ;
- ayant une machine asynchrone (AS) comme moteur électrique d'assistance ;
- ayant une machine asynchrone (AS), régulée par orientation de champ, comme moteur électrique d'assistance ;
- ayant une régulation du couple interne ($M_{i1}$) de la machine asynchrone (AS) selon le principe de la commande ou régulation à perte optimale du flux rotorique par un réglage du courant de magnétisation ($i'_\mu$) en fonction d'un courant actif en valeur de consigne ($i_{sq}$*) déterminé selon le couple d'entraînement respectivement demandé ;
- ayant une dérivation du courant de magnétisation ($i'_\mu$) à partir du courant actif en valeur de consigne ($i_{sq}$*) respectivement nécessaire au couple demandé par l'intermédiaire d'une commande préalable (3) pour la compensation de la formation, retardée en raison de la constante de temps de rotor ($T_R$), du courant de magnétisation.

**2.** Système de direction assistée selon la revendication 1,

- ayant une définition du courant de magnétisation à perte optimale ($i'_\mu$ opt) négligeant la fréquence statorique du courant actif pulsé ($i_{sq}$) ou du courant de magnétisation ($i'_\mu$) selon la formule :

$$i'_{\mu\ opt} = \sqrt[4]{\frac{R_S + R_R'}{R_R}} \cdot \sqrt{\frac{M_{i1}}{K_1}} = K_2 \sqrt{\frac{M_{i1}}{K_1}} = K_2{}^2 \cdot i_{sq}$$

$$= K_3 \cdot i_{sq}$$

$R_S$ = résistance statorique
$R_R'$ = résistance rotorique convertie sur le stator
$M_{i1}$ = moment interne de la AS = $K_1 \cdot i_{sq} \cdot i'_\mu$

**3.** Système de direction assistée selon la revendication 1 et/ou 2,

- ayant une formation de la grandeur réglée du moment interne ($M_{i1}$) respectif de la machine asynchrone (AS) par un multiplicateur (1) pour la formation du produit du courant actif ($i_{sq}$) déterminant le moment et du courant de magnétisation ($i'_\mu$) adapté dans le sens d'une perte minimale.

**4.** Système de direction assistée selon au moins l'une des revendications 1 à 3 précédentes,

- ayant un dispositif de mise en forme linéaire (6) dépendant du courant actif en vue d'une dépendance linéaire entre le moment interne régulé ($M_{i1}$) de la machine asynchrone (AS), le courant actif en valeur de consigne ($i_{sq}$*), déterminé selon le couple demandé, avant la formation dé la grandeur réglée pour le courant actif (isq) et le courant de magnétisation ($i'_\mu$) dérivé de là.

**5.** Système de direction assistée selon au moins l'une des revendications 1 à 4 précédentes,

- ayant une dérivation du courant de magnétisation ($i'_\mu$) à partir du courant actif en valeur de consigne ($i_{sq}$*), déterminé respectivement selon le couple demandé, par l'intermédiaire d'un dispositif de formation de valeur absolue (5).

**6.** Système de direction assistée selon au moins l'une des revendications 1 à 5 précédentes,

- ayant un limiteur (7) pour la limitation du courant de magnétisation ($i'_\mu$) en fonction de la vitesse de rotation (n) dans la machine asynchrone (AS).

FIG 1

FIG 2